(19) **Europäisches Patentamt**
**European Patent Office**
**Office européen des brevets**

(11) **EP 0 948 143 B1**

(12) **EUROPÄISCHE PATENTSCHRIFT**

(45) Veröffentlichungstag und Bekanntmachung des Hinweises auf die Patenterteilung:
**19.10.2011  Patentblatt 2011/42**

(51) Int Cl.:
*H04B 3/54* *(2006.01)*     *H04B 3/56* *(2006.01)*

(21) Anmeldenummer: **99810219.8**

(22) Anmeldetag: **11.03.1999**

(54) **Verfahren und Vorrichtung zur Signalübertragung über Stromversorgungsleitungen**

Method and device for signal communication over power lines

Procédé et dispositif pour la communication de signaux sur lignes d'alimentation

(84) Benannte Vertragsstaaten:
**DE ES IT**

(30) Priorität: **03.04.1998   DE 19815040**

(43) Veröffentlichungstag der Anmeldung:
**06.10.1999   Patentblatt 1999/40**

(73) Patentinhaber: **ABB Research Ltd.**
**8050 Zürich (CH)**

(72) Erfinder: **Dzung, Dacfey, Dr.**
**54330 Wettigen (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**EP-A- 0 604 678     WO-A-98/06187**

**Beschreibung**

Die Erfindung betrifft ein Verfahren und eine Vorrichtung zum Übertragen von Signalen über eine Stromversorgungsleitung, insbesondere eine Hoch- oder Mittelspannungsleitung, gemäss Oberbegriff der unabhängigen Ansprüche.

Sogenannte Power Line Carrier (PLC) Systeme zur Datenübertragung über Hoch-, Mittel- oder Niederspannungsleitungen sind wohlbekannt. In der Regel wird dabei ein Datensignal, welches z.B. Steuerdaten oder Sprache enthält, auf einen Träger aufmoduliert, und das modulierte Trägersignal wird in eine oder mehrere der Phasen und/ oder in eine Abschirmung der Leitung eingekoppelt. Bei der Ausbreitung des Signals entlang der Leitung kommt es zu einer Signalkopplung zwischen den einzelnen Leitern, so dass alle Leiter zur Signalübertragung beitragen. Am Ort des Empfängers wird das Signal sodann aus einem der Leiter ausgekoppelt und demoduliert.

WO 98 06 187 beschreibt ein Verfahren zum Einspeisen und Extrahieren von Kommunikationssignalen in Niederspannungsverteilnetzwerke mit maximal 415 V. Zum Einspeisen wird ein einziges Signal in 3 Teile aufgesplittet und gewichtet in das Netz eingespeist. Zum Extrahieren des Signales werden Teilsignale gewichtet addiert, so dass Einflüsse von Interferenzen, die im Netz entstanden sind, herausgerechnet werden. Die Wichtungsfaktoren werden beispielsweise ermittelt, indem der Einfluss des Netzes auf Testsignale gemessen wird und das Verhältnis von Signal zur Summe von Interferenzen und Rauschen maximiert wird. Dieser Prozess kann jederzeit wiederholt werden, um bei sich ändernden Netzbedingungen die Wichtungswerte anzupassen.

EP 0 604 678 beschreibt ein Verfahren, um Signale über ein elektrisches Netz zu übertragen. Im Netz sind Vorrichtungen vorhanden, die Ereignisse in dem Netz überwachen und Informationen darüber als elektrische Signale an einen Empfänger senden.

Zur Erhöhung der Datenübertragungsraten wurde z.B. versucht, Störungen möglichst gut zu unterdrücken oder herauszufiltern und/oder höhere Trägerfrequenzen einzusetzen, wobei man hierbei jedoch an Grenzen physikalischer Natur stösst.

Es stellt sich deshalb die Aufgabe, ein Verfahren bzw. eine Vorrichtung der eingangs genannten Art bereitzustellen, die höhere Übertragungsraten erlaubt.

Diese Aufgabe wird vom Gegenstand der unabhängigen Ansprüche erfüllt. Erfindungsgemäss werden also aus mehreren inhaltlich unterschiedlichen Datensignalen mehrere unterschiedliche Sendesignale erzeugt, wobei jedes Sendesignal in mindestens einen der Leiter eingekoppelt wird. Bei der Ausbreitung entlang der Hoch- bzw. Mittelspannungsleitung kommt es sodann zwar zu einer Ver mischung der Signale - überraschenderweise zeigt es sich aber, dass es möglich ist, die Signale beim Empfänger wieder zu trennen und so die ursprünglichen Datensignale zu rekonstruieren.

In einer besonders einfachen Ausführung werden die Sendesignale im Sender als eine Linearkombination der auszusendenden Datensignale erzeugt bzw. die Empfangssignale werden im Empfänger linear kombiniert, um die Datensignale zu rekonstruieren.

Die Vorschrift zum Ermitteln der Datensignale aus den Empfangssignalen wird vorzugsweise in einer Kalibrierungsphase ermittelt. Hierbei werden senderseitig Kalibriersignale vorbestimmter Form erzeugt und empfängerseitig werden die entsprechenden Empfangssignale analysiert. Hierzu werden z.B. die Kalibriersignale derart gewählt, dass ihre Kreuzkorrelationen Null sind und ihre Autokorrelationen im wesentlichen Deltafunktionen entsprechen. In diesem Fall können durch Berechnung der Korrelation zwischen den empfangenen Signalen und den vorgegebenen Signalformen die Übertragungscharakteristika der Übertragungsleitung und gegebenenfalls der Koppleranordnungen ermittelt werden.

Durch wiederholte Kalibrierungsphase zwischen normalen Betriebsphasen wird es zudem möglich, ändernde Übertragungseigenschaften der Starkstromleitung, z.B. aufgrund von Witterungseinflüssen, zu berücksichtigen.

Weitere bevorzugte Ausführungen und Anwendungen ergeben sich aus den abhängigen Ansprüchen und aus der nun folgenden Beschreibung anhand der Figuren. Dabei zeigen:

Fig. 1 die senderseitige Ausgestaltung einer Hochspannungsleitung mit Schaltungselementen zum Erzeugen und Einkoppeln der Sendesignale und

Fig. 2 die empfängerseitige Ausgestaltung der Hochspannungsleitung nach Fig. 1 mit den Schaltungselementen zum Auskoppeln und Demodulieren der Empfangssignale.

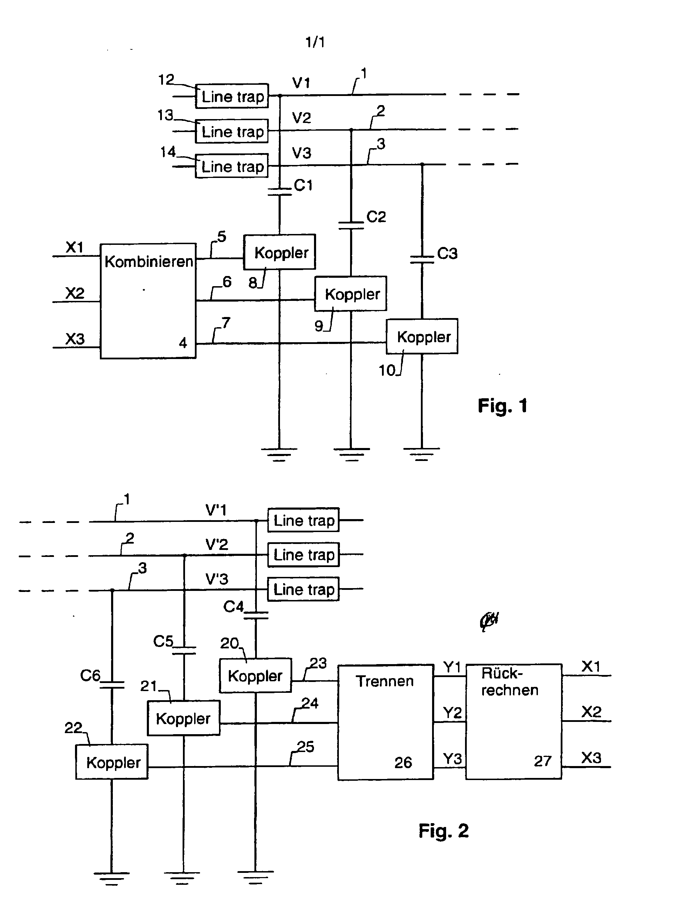

Die Figuren 1 und 2 zeigen eine mögliche Ausführung der Erfindung an einer Hochspannungsleitung mit drei Leitern 1, 2 und 3. Jeder dieser Leiter trägt eine Hochspannung von z.B. 500 kV. Die hier gezeigten Konzepte sind jedoch auch bei Hoch-, Mittel- und Niederspannungsleitungen mit einer anderen Zahl und Konfiguration von Leitern anwendbar.

Senderseitig liegen drei inhaltlich unterschiedliche Eingangs-Datensignale X1, X2 und X3 vor. Diese können z.B. von drei unterschiedlichen Signalquellen stammen oder durch Seriell/Parallelumwandlung eines einzigen seriellen Signals erzeugt worden sein. Die Datensignale X1, X2 und X3 werden in eine Kombinierschaltung 4 eingespiesen, wo sie in weiter unten beschriebener Weise verknüpft werden. Die so erzeugten Signale 5, 6, 7 werden über drei Koppler 8, 9 und 10 mit Koppelkondensatoren C1, C2 und C3 in die Leitungen 1, 2 bzw. 3 eingekoppelt und erzeugen dort Sendesignale mit komplexer Amplitude V1, V2 und V3. Hierzu können z.B. konventionelle Kopplerschaltungen verwendet werden.

Vor der Einkopplung müssen die Signale einer Trägerfrequenz von z.B. einigen 100 kHz aufmoduliert werden. Dies kann entweder bereits vor der Kombinierschaltung 4 oder zwischen Kombinierschaltung 4 und Koppler 8, 9 bzw. 10 geschehen.

In der vorliegenden Ausführung sind die Leitungen gegen eine Seite hin über sog. "Line traps" 12, 13 und 14 abgeschirmt, so dass sich die Signale V1, V2 und V3 nur auf die andere Seite ausbreiten können. Da bei dieser Ausbreitung die Signale der Trägerfrequenz nicht auf den drei Leitungen lokalisiert bleiben, kommt es zu einer starken Durchmischung und ausgangsseitig liegen Empfangssignale V'1, V'2 und V'3 vor, die in der Regel nicht mehr die gleiche Amplitude und Phase wie die Sendesignale V1, V2 bzw. V3 aufweisen.

Die Empfangssignale V'1, V'2 und V'3 werden über Kondensatoren C4, C5, C6 und Koppler 20, 21, 22 ausgekoppelt und über drei Leitungen 23, 24, 25 einer Trennschaltung 26 und einer Rückrechnungsschaltung 27 zugeführt. In diesen Schaltungen werden die Empfangssignale sodann in einer weiter unten beschriebenen Weise getrennt und verarbeitet, um die ursprünglichen Datensignale X1, X2 und X3 zu erhalten. Trennung und Rückrechnung können auch in einem einzigen Schritt bzw. einer kombinierten Auswerteschaltung gleichzeitig stattfinden.

Die empfangenen Signale müssen vor einer Verarbeitung von der Trägerfrequenz getrennt werden. Dies kann entweder vor oder nach der Trennschaltung 26 und der Rückrechnungsschaltung 27 geschehen.

Die vorliegende Erfindung beruht auf der Erkenntnis, dass über eine Leitung mit k Leitern in der Regel bis zu k PLC-Signale gleicher Frequenz übertragen werden können. Hierzu werden die senderseitigen Sendesignale V1, V2, V3 als eine Linearkombination der Eingangs-Datensignale X1, X2 und X3 erzeugt. In Matrixschreibweise:

$$\mathbf{V} = \mathbf{C1} \cdot \mathbf{X}, \qquad\qquad (1)$$

wobei **V** der Vektor {V1, V2, ..., Vk} der Sendesignale, **X** der Vektor {X1, X2, ..., Xm} der Eingangs-Datensignale und **C1** eine Matrix der Verknüpfungskoeffizienten ist.

Die empfängerseitigen Spannungssignale **V'** = {V'1, V'2, ..., V'k} sind

$$\mathbf{V'} = \mathbf{H} \cdot \mathbf{V} + \mathbf{N}, \qquad\qquad (2)$$

wobei die kxk-Matrix **H** die verallgemeinerte Transfermatrix der Leitung und **N** ein additives Rauschen ist. In der Trennschaltung 26 werden aus den Empfangssignalen **V'** die Ausgangssignale **Y** = {Y1, Y2, ..., Ym} durch lineare Kombination berechnet:

$$\mathbf{Y} = \mathbf{C2} \cdot \mathbf{V'}. \qquad\qquad (3)$$

Somit gilt

$$\mathbf{Y} = \mathbf{C2} \cdot \mathbf{H} \cdot \mathbf{C1} \cdot \mathbf{X} + \mathbf{C2} \cdot \mathbf{N} = \mathbf{A} \cdot \mathbf{X} + \mathbf{g} \qquad\qquad (4)$$

wobei **A** als Kanalmatrix und **g** als Rauschvektor bezeichnet wird. Gleichung (4) wird in der Rückrechnungsschaltung 27 näherungsweise nach **X** aufgelöst:

$$\mathbf{X} = \mathbf{L} \cdot \mathbf{Y}. \qquad\qquad (5)$$

In erster Näherung kann unter Vernachlässigung des Rauschens $L = A^{-1}$ gesetzt werden. Stabilere Verfahren mit kleinster quadratischer Abweichung sind jedoch bekannt, siehe z.B. G. Strang, Linear Algebra and its Applications, Hartcourt Brace Javonich, 1988. Wenn $X$ ein komplexes Vektorsignal mit bekanntem Spektrum ist, können auch Wiener-Filter-Verfahren angewendet werden, siehe z.B. B. D. O. Anderson and J. B. Moore, Optimal Filtering, Prentice-Hall, 1979.

Die auf diese Weise erhaltenen Werte von $X$ können sodann den normalen Demodulations- und Detektionsstufen zugeführt werden.

Die Werte der Matrix $A$ hängen von den verwendeten Abbildungen $C1$ und $C2$ und den geometrischen und elektrischen Eigenschaften der Übertragungsleitung, d.h. von der Transfermatrix $H$, ab. Es ist möglich, dass die Charakteristika der Leitung so sind, dass A praktisch singulär ist, so dass eine zuverlässige Trennung der Signale verunmöglicht wird. Dies kann, wie weiter unten beschrieben, unter Umständen durch geschickte Wahl von $C1$ und $C2$ vermieden werden. Ansonsten ist die Dimension m von $X$ zu reduzieren.

Die Matrix $C1$ der Verknüpfungskoeffizienten wird in einer einfachsten Ausführung so gewählt, dass in jeder Zeile nur ein Wert ungleich Null steht, d.h. es wird jedes Signal Xi in genau einen der Leiter 1, 2 bzw. 3 eingekoppelt. Insbesondere wenn die Hoch- bzw. Mittelspannungsleitung homogen ist, bietet es sich jedoch auch an, $C1$ so zu wählen, dass mindestens ein Teil der Signale Xi direkt in genau eine der Moden der Leitung eingekoppelt wird. So kann z.B. im Falle von k=3 und m=3 $C1$ gewählt werden als:

$$C1 = M = \begin{bmatrix} -0.5 & 1 & 1 \\ 1 & 0 & 1 \\ -0.5 & -1 & 0 \end{bmatrix}, \quad (6)$$

wobei $M$ die modale Matrix ist, die die Transfermatrix $H$ eines homogenen Leitungsabschnitts diagonalisiert. Wie in F. Eggimann, W. Senn und K. Morf, *Die trägerfrequenten Übertragungseigenschaften von Hochspannungsleitungen*, Brown Boveri Mitteilungen 8-77 ausgeführt wird, diagonalisiert $M$ im wesentlichen auch die Transfermatrizen einiger anderer Konfigurationen.

Mit der Wahl gemäss Gleichung (6) werden X1 und X2 direkt in die zwei Ausbreitungsmoden eingekoppelt, die sich unabhängig voneinander fortpflanzen. (In der Praxis genügt es, wenn die Spalten von $C1$ proportional zu jenen gemäss Gleichung (6) sind.)

Empfängerseitig wird $C2 = M^{-1}$ gewählt, so dass die Kanalmatrix $A$ diagonal wird und X1 und X2 bereits praktisch getrennt vorliegen.

In vielen praktischen Anwendungen ist die Leitung jedoch nicht homogen, so dass eine kompliziertere Matrix $C1$ bzw. $C2$ gefunden werden muss, um die die Kanalmatrix $A$ zu diagonalisieren. In diesem Falle wird $C1$ wie oben beschrieben vorzugsweise so gewählt, dass in jeder Zeile und Spalte genau ein Element ungleich Null vorhanden ist. Allerdings ist es auch denkbar, mittels Eichmessungen an der Leitung eine Form von $C1$ bzw. $C2$ zu finden, die die Kanalmatrix $A$ besser invertierbar macht.

Zur Lösung der Gleichungen (4) oder (5) muss die Kanalmatrix $A$ bekannt sein. In den meisten praktischen PLC-Systemen kann $A$ nicht theoretisch ermittelt werden und kann sich ausserdem z.B. witterungsbedingt ändern. Es werden deshalb Kalibrierungsmessungen durchgeführt, um $A$ experimentell zu ermitteln. Hierzu erzeugt der Sender Kalibrierungssignale $\chi_i$, einerseits nach der Inbetriebnahme, andererseits in regelmässigen Abständen im Normalbetrieb, so dass z.B. witterungsbedingte Änderungen der Kanalmatrix $A$ kompensiert werden können. Der Empfänger, der die Form der Kalibrierungssignale $\chi_i$ kennt, ermittelt daraus die Koeffizienten von $A$. Im zweidimensionalen Fall wird Gleichung (4) dann z.B. zu:

$$Y1(t) = A_{11} \cdot \chi_1(t) + A_{12} \cdot \chi_2(t) + g_1(t) \quad (7)$$
$$Y2(t) = A_{21} \cdot \chi_1(t) + A_{22} \cdot \chi_2(t) + g_2(t).$$

$\chi_1(t)$ und $\chi_2(t)$ werden so gewählt, dass deren Kreuzkorrelationen im wesentlichen 0 sind und dass deren Autokorrelationen im wesentlichen Deltafunktionen entsprechen, d.h. nur für eine Verschiebung von 0 ungleich Null sind. Hierzu können z.B. künstliche Rauschsignale verwendet werden. Somit können durch Korrelation von Y1 und Y2 mit $\chi_1$ und $\chi_2$ die Koeffizienten von $A$ direkt ermittelt werden.

In den obigen Ausführungen wurde davon ausgegangen, dass die Kanaltransfermatrix $H$ über den Frequenzbereich des PLC-Signals frequenzunabhängig ist. Im allgemeinen ist die Transferfunktion jedoch frequenzabhängig. In diesem Fall wird z.B. Gleichung (7) verallgemeinert zu:

$$Y1(t) = A_{11}{}^{*}\chi_{1}(t) + A_{12}{}^{*}\chi_{2}(t) + g_{1}(t) \qquad (8)$$

$$Y2(t) = A_{21}{}^{*}\chi_{1}(t) + A_{22}{}^{*}\chi_{2}(t) + g_{2}(t),$$

wobei * die Faltung mit den Impulsantworten Aij(t) kennzeichnet.

Die Erfindung kann auch auf diesen Fall angewendet werden. Die hierzu notwendigen Verfahren sind dem Fachmann bekannt. Es sei insbesondere auf die Methode der Wiener-Filterung verwiesen, siehe z.B. B. D. O. Anderson und J. B. Moore, Optimal Filtering, Prentice-Hall 1979.

Für die Übertragung digitaler Daten haben die Signale Xi die Form

$$Xi = \Sigma\ \alpha_{ik}g(t-kT), \qquad\qquad (9)$$

wobei $\alpha_{ik}$ das quadraturamplituden-modulierte Datensymbol der i-ten Übertragung ist, g(t) die Pulsform und T die Symbolperiode (siehe J. G. Proakis, Digital Communications, McGraw-Hill, 1983). Da die Folge $\alpha_{k}$ lediglich eine lineare Transformation des Signals **X** = **X**(t) ist, kann die Erfindung unter Verwendung bekannter Verfahren direkt auf diesen Fall ausgedehnt werden. In N. Amitay und J. Salz, Linear equalization theory in digital data transmission over dually polarized fading radio channels, AT&T Bell Lab. Techn. J., Vol.63, pp. 2215-2259 wird die Lösung eines mathematisch gleichwertigen Problems in einem anderen Übertragungssystem beschrieben.

**Patentansprüche**

1. Verfahren zum Übertragen von Signalen über eine Stromversorgungsleitung mit mehreren Leitern, wobei senderseitig mehrere inhaltlich unterschiedliche Sendesignale (V1, V2, V3) erzeugt werden, jedes Sendesignal senderseitig in mindestens je einen der Leiter (1, 2, 3) eingekoppelt wird, und empfangsseitig aus mehreren der Leiter (1, 2, 3) mehrere Empfangssignale (V'1, V'2, V'3) ausgekoppelt werden, **dadurch gekennzeichnet,**
   **dass** die inhaltlich unterschiedliche Sendesignale (V1, V2, V3) senderseitig durch eine Kombinierschaltung (4) aus mehreren inhaltlich unterschiedlichen Datensignalen (X1, X2, X3) erzeugt werden, und
   **dass** zur Ermittlung der inhaltlich unterschiedlichen Datensignale (X1, X2, X3) die Empfangssignale durch eine Auswerteschaltung (27) rechnerisch miteinander verknüpft werden.

2. Verfahren nach Anspruch 1, **dadurch gekennzeichnet, dass** die Sendesignale (V1, V2, V3) eine Linearkombination der Datensignale (X1, X2, X3) sind.

3. Verfahren nach einem der vorangehenden Ansprüche, **dadurch gekennzeichnet, dass** empfängerseitig die Datensignale als Linearkombination der Empfangssignale (V'1, V'2, V'3) ermittelt werden.

4. Verfahren nach einem der vorangehenden Ansprüche, **gekennzeichnet durch** mindestens eine Kalibrierungsphase, in welcher senderseitig Daten- oder Sendesignale vorbestimmter Form erzeugt und die entsprechenden Empfangssignale analysiert werden, und dass daraus eine Vorschrift zum Ermitteln der Datensignale aus den Empfangssignalen (**V'**) abgeleitet wird.

5. Verfahren nach einem der vorangehenden Ansprüche zum Übertragen von Signalen über eine Hoch- oder Mittelspannungsleitung.

**Claims**

1. Method for transmission of signals via a power supply line having a plurality of conductors, with a plurality of transmission signals (V1, V2, V3) with different contents being produced at the transmitter end, each transmission signal being input at the transmitter end into at least in each case one of the conductors (1, 2, 3), and a plurality of received signals (V'1, V'2, V'3) being output at the receiving end from a plurality of the conductors (1, 2, 3) **characterized**

**in that** the transmission signals (V1, V2, V3) which have different contents are produced at the transmitter end by a combination circuit (4) from a plurality of data signals (X1 X2, X3) which have different contents, and
**in that** the received signals are computationally linked to one another by an evaluation circuit (27) in order to determine the data signals (X1 X2, X3) which have different contents.

2.   Method according to Claim 1, **characterized in that** the transmission signals (V1, V2, V3) are a linear combination of the data signals (X1, X2, X3).

3.   Method according to one of the preceding claims, **characterized in that** the data signals are determined at the receiver end as a linear combination of the received signals (V'1, V'2, V'3).

4.   Method according to one of the preceding claims, **characterized by** at least one calibration phase, in which data or transmission signals of a predetermined form are produced at the transmitter end, and the corresponding received signals are analyzed, and in that a rule is derived therefrom for determination of the data signals from the received signals (**V'**).

5.   Method according to one of the preceding claims, for transmission of signals via a high-voltage or medium-voltage line.


**Revendications**

1.   Procédé de transmission de signaux via une ligne d'alimentation en courant équipée de plusieurs conducteurs ;
plusieurs signaux d'émission (V1, V2, V3) de contenu différent étant produits du côté de l'émetteur ;
chaque signal d'émission étant couplé, du côté de l'émetteur, dans au moins respectivement un des conducteurs (1, 2, 3) ; et
plusieurs signaux de réception (V'1, V'2, V'3) étant découplés du côté de la réception à partir de plusieurs des conducteurs (1, 2, 3) ;
**caractérisé en ce que :**

les signaux d'émission (V1, V2, V3) de contenu différent étant produits du côté de l'émetteur par un circuit de combinaison (4) à partir de plusieurs signaux de données (X1 X2, X3) de contenu différent ; et
pour calculer les signaux de données (X1 X2, X3) de contenu différent, les signaux de réception sont associés les uns aux autres par voie de calcul au moyen d'un circuit d'analyse (27).

2.   Procédé selon la revendication 1, **caractérisé en ce que** les signaux d'émission (V1, V2, V3) sont une combinaison linéaire des signaux de données (X1, X2, X3).

3.   Procédé selon l'une quelconque des revendications précédentes, **caractérisé en ce que** du côté de la réception, les signaux de données sont calculés sous la forme d'une combinaison linéaire des signaux de réception (V'1, V'2, V'3).

4.   Procédé selon l'une quelconque des revendications précédentes, **caractérisé par** au moins une phase d'étalonnage pendant laquelle des signaux d'émission ou de données sont produits du côté de l'émetteur sous une forme prédéterminée et pendant laquelle les signaux de réception correspondants sont analysés, ce qui permet de déduire une consigne de calcul des signaux de données à partir des signaux de réception (V').

5.   Procédé selon l'une quelconque des revendications précédentes pour la transmission de signaux via des lignes de haute et moyenne tension.

1/1

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9806187 A

- EP 0604678 A

**In der Beschreibung aufgeführte Nicht-Patentliteratur**

- **G. Strang.** Linear Algebra and its Applications. Hartcourt Brace Javonich, 1988
- **B. D. O. Anderson ; J. B. Moore.** Optimal Filtering. Prentice-Hall, 1979
- **D. O. Anderson ; J. B. Moore.** Optimal Filtering. Prentice-Hall, 1979

- **J. G. Proakis.** Digital Communications. McGraw-Hill, 1983
- **N. Amitay ; J. Salz.** Linear equalization theory in digital data transmission over dually polarized fading radio channels. *AT&T Bell Lab. Techn. J.,* vol. 63, 2215-2259